(19)

Europäisches
Patentamt
European
Patent Office
Office européen
des brevets

(11) **EP 2 264 824 A1**

(12) **EUROPEAN PATENT APPLICATION**

(43) Date of publication:
**22.12.2010 Bulletin 2010/51**

(51) Int Cl.:
**H01M 10/46** (2006.01)     **H02J 7/00** (2006.01)

(21) Application number: **10176880.2**

(22) Date of filing: **20.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.10.2007 US 981308 P**
            **19.10.2007 US 981259 P**

(62) Document number(s) of the earlier application(s) in accordance with Art. 76 EPC:
**08839934.0 / 2 212 967**

(71) Applicant: **ZPower, Inc.**
    **Camarillo, CA 93012 (US)**

(72) Inventors:
  • **Renken, Troy**
    **Camarillo, CA 3711 (US)**
  • **Powers, Tim**
    **Westlake Village, CA 3646 (US)**
  • **Huang, Biying**
    **Camarillo, CA 3353 (US)**

(74) Representative: **Cohausz & Florack**
    **Patent- und Rechtsanwälte**
    **Partnerschaftsgesellschaft**
    **Bleichstraße 14**
    **40211 Düsseldorf (DE)**

Remarks:
    This application was filed on 15-09-2010 as a divisional application to the application mentioned under INID code 62.

(54) **Charger and method for charging for silver zinc batteries**

(57)     A zinc alkaline rechargeable battery pack is disclosed. The zinc alkaline rechargeable battery pack includes a casing including a plurality of electrochemical cells and recharging management circuitry. Each cell of the plurality of electrochemical cells includes an alkaline electrolyte, an anode and a cathode. The anode comprises zinc. The cathode comprises silver, an oxide of silver, silver metal, or a combination of the silver, the oxide of silver and the silver metal. The alkaline electrolyte includes an aqueous hydroxide of an alkali metal. The recharging management circuitry is connected to the plurality of electrochemical cells. The recharging management circuitry includes a processor, a first voltage detector/controller connected to the processor, a second voltage detector/controller connected to the processor, and a current sensor connected to the processor. The first voltage detector/controller, the second voltage detector/controller and current sensor are connected to the plurality of electrochemical cells. A system for charging a zinc alkaline rechargeable battery pack is also disclosed. A method for charging the rechargeable battery pack is also disclosed.

FIG. 1

EP 2 264 824 A1

**Description**

This application claims the benefit of U.S. Provisional Patent Application Serial Nos. 60/981,259 and 60/981,308, both of which were filed on October 19, 2007 and are hereby incorporated by reference.

The disclosure relates to an apparatus for recharging batteries and to a method for charging the same.

Rechargeable batteries are known in the art and commonly used, for example, in portable electronic devices. Although conventional rechargeable batteries are useful, the systems and method used to recharge the batteries are nevertheless susceptible to improvements that may enhance or improve their service life, shelf life and and/or performance. Therefore, a need exists in the art for the development of an improved apparatus for recharging batteries and method for charging the same.

The present invention provides a zinc alkaline rechargeable battery pack comprising a plurality of electrochemical cells that are connected to recharging management circuitry, wherein each of the electrochemical cells comprises an alkaline electrolyte comprising an aqueous metal hydroxide, an anode comprising zinc, and a cathode comprising silver, an oxide of silver, silver metal, or a combination of thereof; and the recharging management circuitry connected to the plurality of electrochemical cells includes a processor, a first voltage detector/controller connected to the processor, a second voltage detector/controller connected to the processor, and a current sensor connected to the processor, wherein the first voltage detector/controller, the second voltage detector/controller and current sensor are connected to the plurality of electrochemical cells.

Battery packs of the present invention include those in which the plurality of electrochemical cells further comprises a first bank of cells that comprises three electrochemical cells, and a second bank of cells that comprises three electrochemical cells, wherein the current sensor is connected to both of the first bank of cells and the second bank of cells, the first voltage detector/controller is connected to the first bank of cells, and the second voltage detector/controller is connected to the second bank of cells.

In other exemplary battery packs, the recharging management circuitry further comprises a charge field effect transistor connected to the first voltage detector/controller and the processor, and a discharge field effect transistor connected to the second voltage detector/controller and the processor. The recharging management circuitry can define a first end of an interface comprising at least one first node extending from the charge field effect transistor, at least one second node extending from the discharge field effect transistor, and a serial communication bus extending from the processor. And the first node and the second node can define a means for connecting the recharging management circuitry to an AC/DC converter of an external device that is coupled to a power source; and the serial communication bus can define a means for connecting the recharging management circuitry to a host controller of the external device. Furthermore, the recharging management circuitry can define a means for detecting a maximum voltage of at least one cell of the plurality of electrochemical cells, a means for detecting a maximum charging capacity of the cell, a means for reducing a constant current applied to the cell when the cell has been charged to about the maximum voltage, and/or a means for arresting the constant current applied to the cell when the cell has been charged to about the maximum charging capacity. In other battery packs, an exemplary means for detecting the maximum voltage of at least one cell of the plurality of electrochemical cells comprises one or more of the first voltage detector/controller and the second voltage detector/controller, and an exemplary means for detecting the maximum charging capacity of the cell comprises the current sensor.

Other battery packs of the present invention comprise an optional casing, and an input device extending from the casing, wherein the input device is connected to the processor, and a pre-set maximum charging voltage of at least one cell of the plurality of electrochemical cells and a pre-set maximum charging capacity of the cell is programmed into one or more of the processor and the serial communication bus. Exemplary input devices include a binary controller, wherein the binary controller comprises a button, touchpad, mouse, lever, keyboard, joystick, or trackball. Also, the input device can define a means for manipulating one or more of the pre-set maximum voltage of at least one cell of the plurality of electrochemical cells and the pre-set maximum charging capacity of the cell.

Another aspect of the present invention provides a system for charging a zinc alkaline rechargeable battery pack, comprising a host device comprising an AC/DC converter and a host controller; and a casing removably-coupled to the host device at an interface, wherein the casing comprises a plurality of electrochemical cells, wherein each electrochemical cell comprises an alkaline electrolyte, an anode, and a cathode, wherein the anode comprises zinc, the cathode comprises silver, an oxide of silver, silver metal, or any combination thereof, and the alkaline electrolyte comprises an aqueous hydroxide of an alkali metal; and recharging management circuitry associated with one of the host device or the casing, wherein the recharging management circuitry is connected to the plurality of electrochemical cells, and the recharging management circuitry comprises a processor, a first voltage detector/controller connected to the processor, a second voltage detector/controller connected to the processor, and a current sensor connected to the processor, wherein the first voltage detector/controller, the second voltage detector/controller and current sensor are connected to the plurality of electrochemical cells.

In several embodiments, the plurality of electrochemical cells comprises a first bank of electrochemical cells comprising three electrochemical cells, and a second bank of electrochemical cells comprising three electrochemical cells, wherein the current sensor is connected to both of the first bank of cells and the second bank of cells, the first voltage detector/controller is connected to the first bank of cells, and the second voltage detector/controller is connected to the second bank of cells.

In other embodiments, the recharging management circuitry further comprises a charge field effect transistor connected to the first voltage detector/controller and the processor, and a discharge field effect transistor connected to the second voltage detector/controller and the processor. Furthermore, the recharging management circuitry can be disposed within the casing and define a first end of an interface comprising at least one first node extending from the charge field effect transistor, at least one second node extending from the discharge field effect transistor, and a serial communication bus extending from the processor. In several examples, the first node and the second node define a means for connecting the recharging management circuitry to the AC/DC converter of the external device that is coupled to a power source, wherein the serial communication bus defines a means for connecting the recharging management circuitry to the host controller of the external device.

In other embodiments, the recharging management circuitry defines a means for detecting a maximum voltage of at least one cell of the plurality of electrochemical cells, a means for detecting a maximum charging capacity of the cell, a means for reducing a constant current applied to the cell when the cell has been charged to about the maximum voltage, and a means for arresting the constant current applied to the cell when the cell has been charged to about the maximum charging capacity. The means for detecting the maximum voltage of the cell of the plurality of electrochemical cells can comprise one or more of the first voltage detector/controller and the second voltage detector/controller, wherein means for detecting a maximum charging capacity of the cell comprises the current sensor.

Other battery packs of the present invention further comprise an input device extending from one or more of the host controller of the host device and the processor of the casing, wherein a pre-set maximum charging voltage of at least one cell of the plurality of electrochemical cells and a pre-set maximum charging capacity of the cell is programmed into one or more of the processor and the serial communication bus. Several input devices include a binary controller, wherein the binary controller includes a button, touchpad, mouse, lever, keyboard, joystick, or trackball. The input device can define a means for manipulating one or more of the pre-set maximum voltage of at least one cell of the plurality of electrochemical cells and the pre-set maximum charging capacity of the cell. Exemplary host devices include one or more of a desktop computer workstation, a laptop computer workstation, a portable music player, a portable video player, a cellular phone, digital camera, and a global positioning system device.

Another aspect of the present invention provides a method for charging a zinc alkaline rechargeable battery pack, comprising the steps of providing a plurality of electrochemical cells, wherein each cell comprises an alkaline electrolyte, an anode, and a cathode, wherein the anode comprises zinc, the cathode comprises silver, an oxide of silver, silver metal, or any combination thereof, and the alkaline electrolyte comprises an aqueous hydroxide of an alkali metal; providing recharging management circuitry connected to the plurality of electrochemical cells, wherein the recharging management circuitry is provided for detecting a voltage of at least one cell of the plurality of electrochemical cells, detecting a charging capacity of the cell, reducing a constant current applied to the cell when the cell has been charged to about a maximum voltage, and arresting the constant current applied to the cell when the cell has been charged to about a maximum capacity.

Several methods of the present invention optionally include additional steps such as after the reducing a constant current step and prior to the arresting the constant current step, the method further comprises the steps of determining if the detected voltage is equal to or greater than the maximum voltage, and, if the detected voltage is equal to or greater than the maximum voltage, further reducing the constant current applied to the at least one cell of the plurality of electrochemical cells; further detecting the charging capacity of the cell to determine if the cell has been charged to about a maximum capacity; and looping the determining step and the further detecting step until the charging capacity of the cell has been charged to about the maximum capacity, and, upon charging the cell to about the maximum capacity, advancing the method to the arresting step. Other steps include providing an interface for permitting the recharging management circuitry to be interfaced with a host device; and defining the recharging management circuitry to include a first end of the interface, wherein the first end of the interface comprises one or more nodes extending from the recharging management circuitry for interfacing the recharging management circuitry with an AC/DC converter of the host device, and at least a serial communication bus extending from the recharging management circuitry for interfacing the recharging management circuitry with a host controller of the host device. Several methods also include providing an input device connected to the recharging management circuitry for manipulating the maximum capacity of at least one cell of the plurality of electrochemical cells.

Another aspect of the present invention provides a method for charging a zinc alkaline rechargeable battery pack, comprising the steps of providing a plurality of electrochemical cells, wherein each electrochemical cell comprises an alkaline electrolyte, an anode, and a cathode, wherein the anode comprises zinc, the cathode comprises silver, an oxide of silver, silver metal, or any combination thereof, and the alkaline electrolyte includes an aqueous hydroxide of an alkali metal; providing a user-defined target capacity of at least one cell of the plurality of electrochemical cells;

measuring an open circuit voltage of at least one electrochemical cell; determining if the open circuit voltage is greater than or less than an open circuit voltage value; calculating a period of time for charging the electrochemical cell; and limiting a charging period of the electrochemical cell according to the provided user-defined target capacity. In several methods, the open circuit threshold voltage value is approximately 1.7V. In other methods, the voltage threshold is approximately 1.9V.

Several methods further comprise the steps of applying a charge current to the electrochemical cell; and determining an amount of time for the cell to reach a voltage threshold. Other methods further comprise the step of calculating a depth of discharge of the electrochemical cell by utilizing one of a first equation and a second equation, wherein the first equation is utilized if the determined open circuit voltage is greater than the open circuit threshold voltage value, and the second equation is utilized if the determined open circuit voltage is less than the open circuit threshold voltage value. Other steps that are useful in the present method include calculating a state of charge of at least one electrochemical cell of the plurality of electrochemical cells by utilizing the calculated depth of discharge, the determined amount of time, and the applied charge current. The calculating the period of time step can be conducted by utilizing the provided a user-defined target capacity, the calculated state of charge, and the applied charge current.

The disclosure will now be described, by way of example, with reference to the accompanying drawings, in which:

Figure 1     is a schematic of a rechargeable battery pack coupled to host device in accordance with an exemplary embodiment of the invention;

Figure 2     is a logic flow diagram of an algorithm for charging the rechargeable battery pack of Figure 1 in accordance with an exemplary embodiment of the invention;

Figure 3     is a graph depicting nominal voltage and current charge characteristics of a rechargeable battery pack in accordance with an exemplary embodiment of the invention;

Figure 4     is a logic flow diagram of an algorithm for charging the rechargeable battery pack of Figure 1 in accordance with an exemplary embodiment of the invention;

Figure 5     is a schematic of a rechargeable battery pack coupled to a host device in accordance with an exemplary embodiment of the invention;

Figure 6     is a schematic of a rechargeable battery pack coupled to host device in accordance with an exemplary embodiment of the invention;

Figure 7     is a schematic of a rechargeable battery pack coupled to a host device in accordance with an exemplary embodiment of the invention;

Figure 8     is a schematic of a rechargeable battery pack coupled to host device in accordance with an exemplary embodiment of the invention;

Figure 9     is a schematic of a rechargeable battery pack coupled to host device in accordance with an exemplary embodiment of the invention;

Figure 10     is a graphical illustration depicting charging and discharging profiles of a rechargeable battery pack in accordance with an exemplary embodiment of the invention;

Figure 11     is a flow diagram of an algorithm for charging the rechargeable battery pack in accordance with an exemplary embodiment of the invention;

Figure 12     is a plot of a plurality of charging curves for a plurality of rechargeable battery packs each including approximately 10% remaining charge through approximately 100% remaining charge in accordance with an exemplary embodiment of the invention;

Figure 13     is a plot of a plurality of charging curves for a plurality of rechargeable battery packs each including approximately 50% remaining charge through approximately 100% remaining charge in accordance with an exemplary embodiment of the invention;

Figure 14     is a plot of a plurality of charging curves for a plurality of rechargeable battery packs each including approximately 10% remaining charge through approximately 40% remaining charge in accordance with an exemplary embodiment of the invention;

Figure 15 is a plot of an amount of time needed to traverse a 1.9V voltage threshold according to the plot of Figure 12 in accordance with an exemplary embodiment of the invention;

Figure 16 is a portion of a curve plotted in Figure 15 in accordance with an exemplary embodiment of the invention;

Figure 17 is a portion of a curve plotted in Figure 15 in accordance with an exemplary embodiment of the invention; and

Figure 18 is a table including data related to the plots of Figures 12-17 in accordance with an exemplary embodiment of the invention.

The Figures illustrate an exemplary embodiment of a rechargeable battery and method for charging the same in accordance with an embodiment of the invention. Based on the foregoing, it is generally understood that the nomenclature used herein is simply for convenience and the terms used to describe the invention should be given the broadest meaning understood by one of ordinary skill in the art.

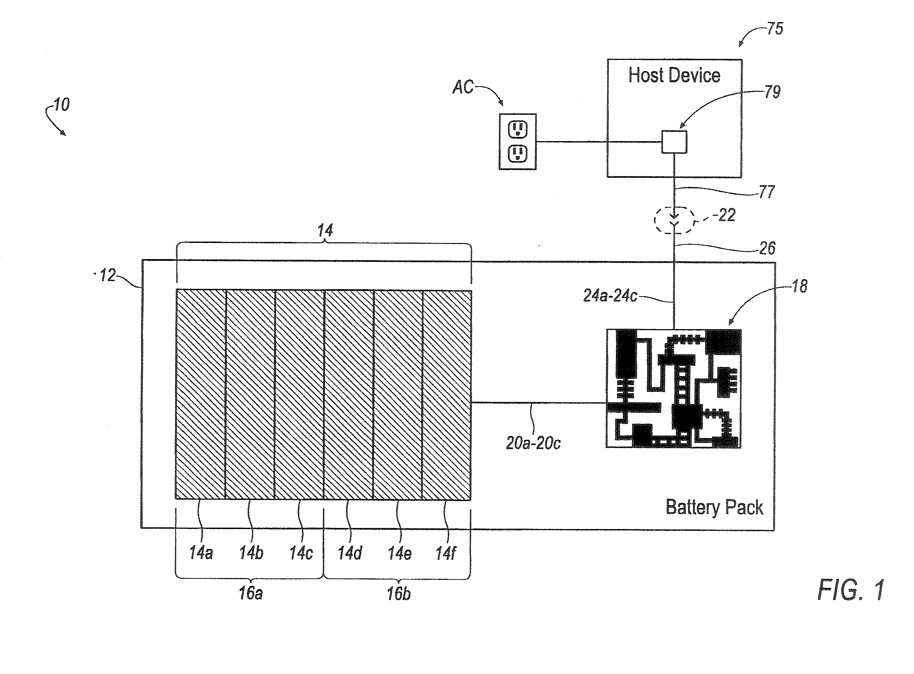

Referring to Figure 1, a battery pack is shown generally at 10 in accordance with an exemplary embodiment of the invention. The battery pack 10 may be removably-coupled to and provide electrical power for a host device, which is shown generally at 75 in accordance with an exemplary embodiment of the invention.

In an embodiment, the battery pack 10 has a charge capacity that ranges between approximately 0% and approximately 100% of the battery pack's rated capacity. When the battery pack 10 is said to be fully charged, the charge capacity may be at or about 100%. After coupling the battery pack 10 to and providing power for the host device 75, the charge capacity of the battery pack 10 may be depleted or reduced to a charge capacity less than about 100% of its rated capacity. The charge capacity of the battery pack 10 may be replenished from a depleted or reduced charge capacity back to any desirable charge capacity by recharging the battery pack 10; as such, the battery pack 10 may be referred to as a rechargeable battery pack 10.

In an embodiment, energy may be delivered to the rechargeable battery pack 10 for the purpose of recharging the rechargeable battery pack 10. A method for charging the rechargeable battery pack 10 is explained in greater detail in the foregoing disclosure.

In an embodiment, the rechargeable battery pack 10 may include a body or casing 12. This body/casing 12 may be rigid. Disposed within the casing 12 may be a plurality of cells 14. In an embodiment, each cell 14a-14f of the plurality of cells 14 may be referred to as an electrochemical cell, a galvanic electrochemical cell or the like.

In an embodiment, an electrochemical cell is a cell having two electrodes (i.e., an anode and a cathode) and an electrolyte (i.e., a substance that behaves as an electrically-conductive medium for facilitating mobilization of electrons and cations). Electrolytes may include mixtures of materials such as, for example, aqueous solutions of alkaline agents. Some electrolytes may also comprise additives, such as buffers including a borate, phosphate or the like. In an embodiment, it will be appreciated that some electrochemical cells such as, for example, metal-air cells are not limited to include two electrodes and may include, for example, three electrodes, wherein an air electrode is split (i.e., the air electrode reduces oxygen and liberates oxygen on discharge).

In an embodiment, each cell 14a-14f of the plurality of cells 14 include at least one electrochemical cell having a cathode comprising (a) silver, (b) an oxide of silver, (c) silver metal, or any combination thereof. In an embodiment, each cell 14a-14f of the plurality of cells 14 includes at least one electrochemical cell having an anode comprising zinc. In an embodiment, each cell 14a-14f of the plurality of cells 14 includes an alkaline electrolyte comprising an aqueous hydroxide of an alkali metal. In an embodiment, the electrolyte may comprise $LiOH$, $NaOH$, $KOH$, $CsOH$, $RbOH$, or any combination thereof.

In an embodiment, the plurality of cells 14 may be arranged in any desirable manner to define one or more banks of cells 16a, 16b. In an embodiment, the plurality of cells 14 may be grouped into a first bank of cells 16a and a second bank of cells 16b. In an embodiment, each of the first and second banks of cells 16a, 16b may include three cells arranged in series that are shown at 14a-14c and 14d-14f, respectively. Although the plurality of cells 14 are grouped to include two banks of cells 16a, 16b each having three cells 14a-14c, 14d-14f, it will be appreciated that the plurality of cells 14 is not limited to include a particular arrangement or number of banks of cells 16a, 16b or number of individual cells 14a-14c, 14d-14f and that the invention may be practiced with any desirable number of banks of cells 16a, 16b having any amount of individual groups of cells 14a-14c, 14d-14f.

In an embodiment, the plurality of cells 14 are recharged in a controlled manner. In an embodiment, the rechargeable battery pack 10 may include recharging management circuitry that is shown generally at 18 in accordance with an embodiment of the invention. In an embodiment, the plurality of cells 14 are connected to the recharging management circuitry 18 by one or more nodes 20a-20c.

In an embodiment, rechargeable battery pack 10 is removably-coupled to the host device 75 at an interface 22. In an embodiment, the rechargeable battery pack 10 may include one or more nodes 24a-24c extending from the recharging management circuitry 18 to define a first end 26 of the interface 22. A second end of the interface 22 is shown generally at 77 that leads to circuitry 79 of the host device 75. In an embodiment, the circuitry 79 of the host device 75 may be connected to a main power system, which is shown generally at AC in accordance with an embodiment of the invention.

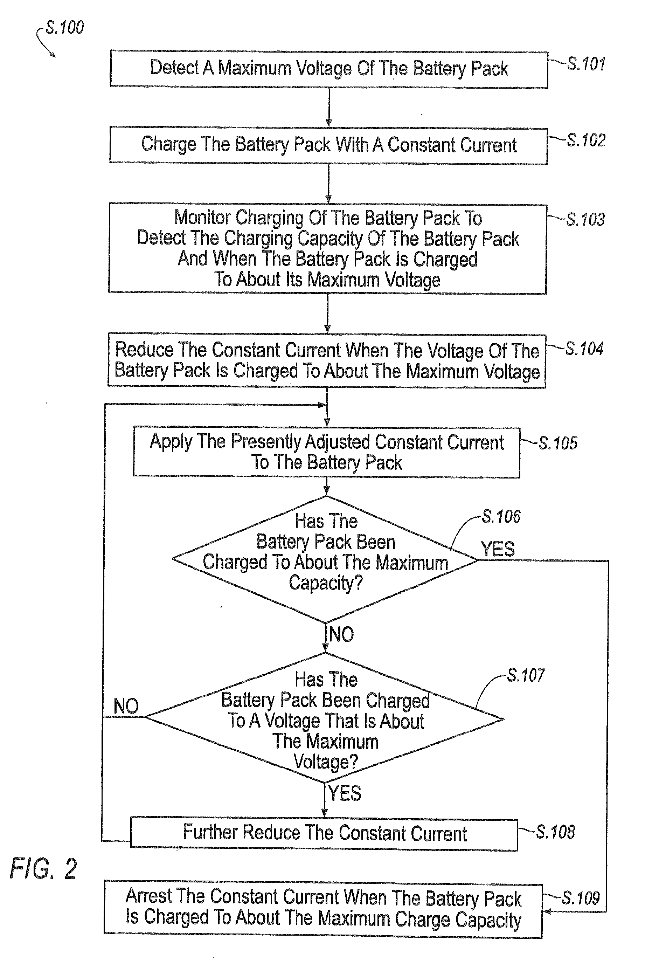

In an embodiment, the recharging management circuitry 18 has the ability to carry out a novel charging algorithm S.100 that is shown, for example, in Figure 2. Referring to Figure 2, the algorithm S.100 includes the steps of detecting an open circuit, maximum voltage of the rechargeable battery pack 10 at step S.101. In an embodiment, the plurality of cells 14 may include zinc-silver oxide cells; as such, the maximum voltage may be less than about 3.0 V.

As used herein, "maximum voltage", "maximum charging voltage", "open circuit maximum voltage", and "open circuit voltage threshold value" are used interchangeably and refer to the maximum voltage that an electrochemical cell can be charged. In several examples, the 'maximum voltage' can be equal to a "rated voltage", which is the maximum voltage that an electrochemical cell can be charged without interfering with the cell's intended utility, or the maximum voltage can be selectable by a battery user. For example, in several silver-zinc electrochemical cells that are useful in portable electronic devices, the maximum voltage is less than about 3.0 V (e.g., less than about 2.8 V, less than about 2.5 V, about 2.3 V or less, or about 2.0 V). In other batteries, such as, for example, lithium ion batteries that are useful in portable electronic devices, the maximum voltage is less than about 15.0 V (e.g., less than about 13.0 V, or about 12.6 V or less). The maximum voltage for a battery can vary depending on the number of charge cycles constituting the battery's useful life, the shelf-life of the battery, the power demands of the battery, the configuration of the electrodes in the battery, and the amount of active materials used in the battery.

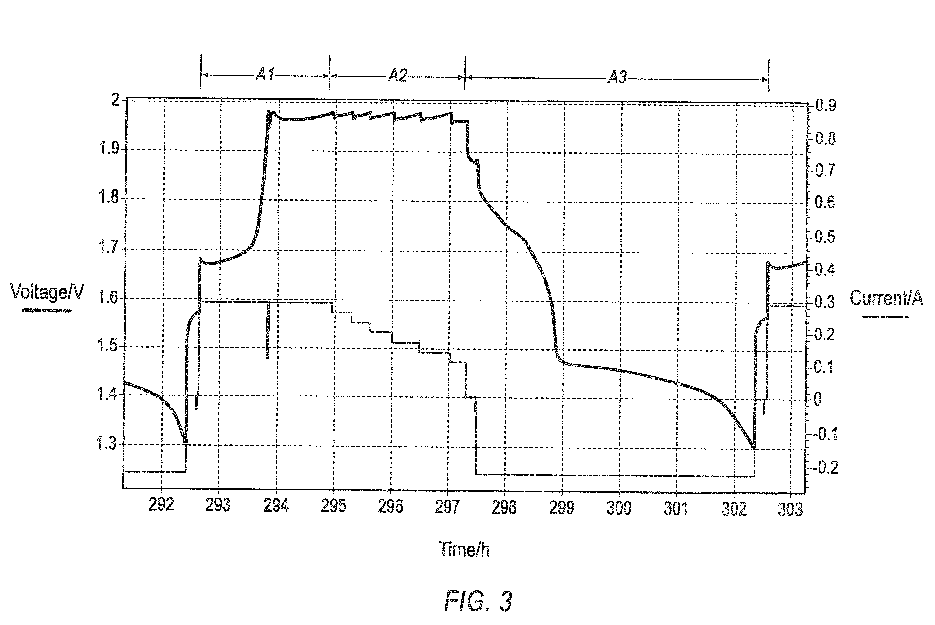

The algorithm S.100 also includes charging the rechargeable battery pack 10 with a substantially constant current at step S.102. Referring to Figure 3, in an embodiment, the maximum voltage may be about equal to 1.95V and the constant current may be about equal to 0.3A, which is shown generally at section A1 of the graph. In an embodiment, section A1 of the graph may be referred to as a "constant current" mode of the algorithm S.100.

As used herein, "constant current" or "constant charge current" refers to the rate of flow of positive charges to an electrode of a battery. A constant current is a substantially constant rate of flow of positive charges. For example, a constant current can mean that the rate of flow of positive charges does not vary more than 10% (e.g., more than 5%, more than 2%, more than 1%, or more than 0.5%). For example, a constant current may be, for example, $0.5 \pm 0.05$ Amps.

Referring to Figure 2, after step S.102, the algorithm S.100 includes monitoring the rechargeable battery pack 10 to detect the charging capacity (i.e. state of charge) and voltage of the rechargeable battery pack 10 at step S.103 and reducing the constant current when the rechargeable battery pack 10 is charged to approximately about its maximum voltage at step S.104. Referring to Figure 3, the constant current may be reduced in continuous or incremented steps of about, for example, 1 mA to about 120 mA, which is shown generally at section A2 of the graph. In an embodiment, if the host device 75 includes, for example, a laptop computer workstation, the constant current may be reduced in continuously or step-wise (such as steps of about 100mA). In an embodiment, section A2 of the graph may be referred to as a "constant voltage" mode of the algorithm S.100.

Referring to Figure 2, after step S.104, the algorithm S.100 includes applying the presently-adjusted constant current to the battery pack at step S.105 and determining if the rechargeable battery pack 10 has been charged to its maximum capacity at step S.106. Once the maximum capacity of the rechargeable battery pack 10 has been achieved, the algorithm S.100 includes arresting the constant current at step S.109, which is shown generally at section A3 of the graph of Figure 3. One way of determining whether or not the maximum capacity of pack 10 has been achieved is to remove the charging current and monitor the open circuit voltage of the battery. If the open circuit voltage remains above a predetermined maximum voltage for a predetermined period of time, then the battery has been charged to its maximum capacity.

As used herein, "maximum capacity" and "maximum charging capacity" are used interchangeably and refer to the maximum capacity of electrical energy to which the battery can be charged in at least one charging cycle. The value of a maximum capacity is one in the range of about 0 Ah (ampere hours or amp hours) to a capacity less than the theoretical capacity of the battery. Maximum capacity can be determined by a battery manufacturer or, in some instances, it can be determined by a user (e.g., a human, software, or firmware).

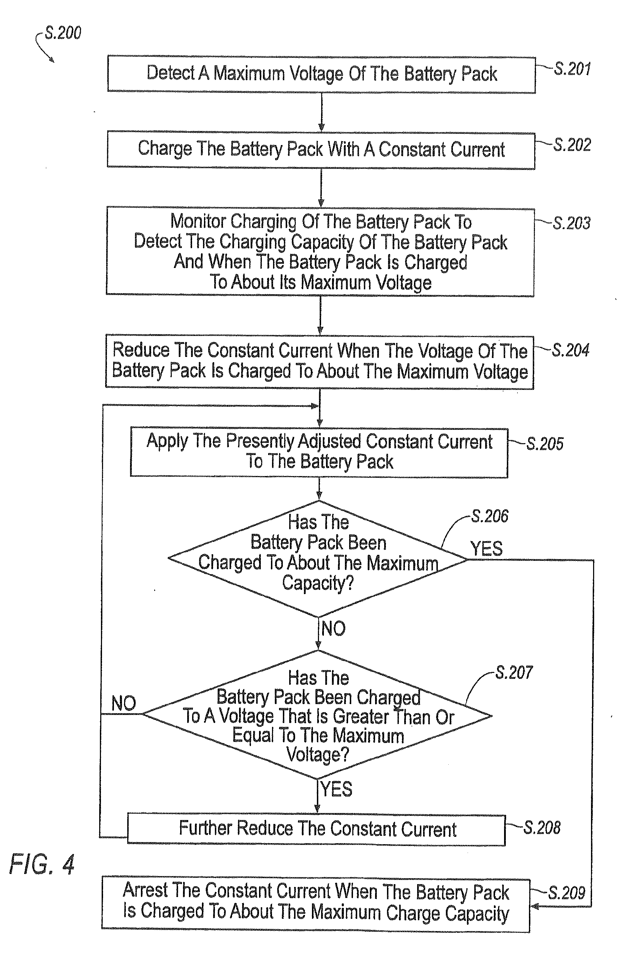

At step S.104, it will be appreciated that the phrase "about its maximum voltage" may mean a voltage that is within, for example, a voltage range encompassing the maximum voltage. In an embodiment, the range encompassing the maximum voltage may include a lower voltage limit that is substantially equal to but slightly less than the maximum voltage, and, an upper voltage limit that is substantially equal to but slightly greater than the maximum voltage. Accordingly, it will be appreciated that the algorithm S.100 may also include steps S.107 and S.108 to determine if the detected voltage of the rechargeable battery pack 10 is, in an embodiment, within the voltage range. As such, if it is determined that the voltage of the rechargeable battery pack 10 has been charged to a voltage that is within, for example, the voltage range (i.e. at step S.107), the constant current may be further reduced (i.e. at step S.108) in order to reduce the voltage to a value that is lower than, for example, the lower voltage limit of the voltage range. It will be appreciated that steps S.105 through S.08 may be looped in order to further adjust the voltage and constant current until the rechargeable battery pack 10 is charged to about the maximum capacity at step S.106 where the loop is exited in order to arrest the constant current at step S.109. It will be appreciated, however, that the recharging management circuitry 18 is not limited to the algorithm S.100. In an embodiment, the recharging management circuitry 18 may include an alternative novel algorithm that is shown generally at S.200 in Figure 4 in accordance with an exemplary embodiment of the invention. In an embodiment, the algorithm S.200 includes steps S.201 through S.209. However, rather than monitoring for a voltage that is about the maximum voltage as described at step S.107, step S.207 monitors for a voltage that is about equal to or exceeds the maximum voltage of the rechargeable battery pack 10.

Referring to Figure 4, step S.207 (following step S.206) determines if the voltage level of the rechargeable battery pack 10 is equal to or exceeds the maximum voltage of the rechargeable battery pack 10. If the voltage is equal to or exceeds the maximum voltage of the rechargeable battery pack 10, the algorithm S.200 is advanced to step S.208 such that the constant current is further reduced in order to reduce the voltage of the rechargeable battery pack 10. Then, after step S.208, the algorithm S.200 is returned to step S.205 where the further reduced constant current is applied to the rechargeable battery pack 10. The algorithm S.200 is then advanced from step S.205 to step S.206.

In an embodiment, it will be appreciated that steps S.206-S.207 will be looped until the voltage of the rechargeable battery pack 10 is less than, but about equal to the maximum voltage of the rechargeable battery pack 10. Accordingly, in an embodiment, the constant current may be reduced one or more times until the voltage is substantially equal to but slightly less than the maximum voltage. Once the algorithm S.200 is looped as described above, and, when the rechargeable battery pack 10 is charged to about the maximum capacity, the algorithm S.200 is advanced to step S.209 where the reduced / further reduced constant current is arrested.

Although several algorithms S.100, S.200 are described above including a plurality of steps S.101-S.109 and S.201-S.209, it will be appreciated that the algorithms S.100, S.200 are not limited to the steps described above. In an embodiment, for example, one or more additional steps may be included to further increase the life, efficiency or the like of the rechargeable battery pack 10. For example, when the rechargeable battery pack 10 comprises a plurality of cells 14, the algorithm S.100, S.200 may comprise an additional step of balancing each cell 14a-14f of the plurality of cells 14 by shunting the current of one or more cells 14a-14f of the plurality of cells 14 that has been charged to the maximum voltage. Accordingly, it will be appreciated that additional steps may be provided for each algorithm S.100, S.200 without departing from the broad concept associated with each algorithm S.100, S.200.

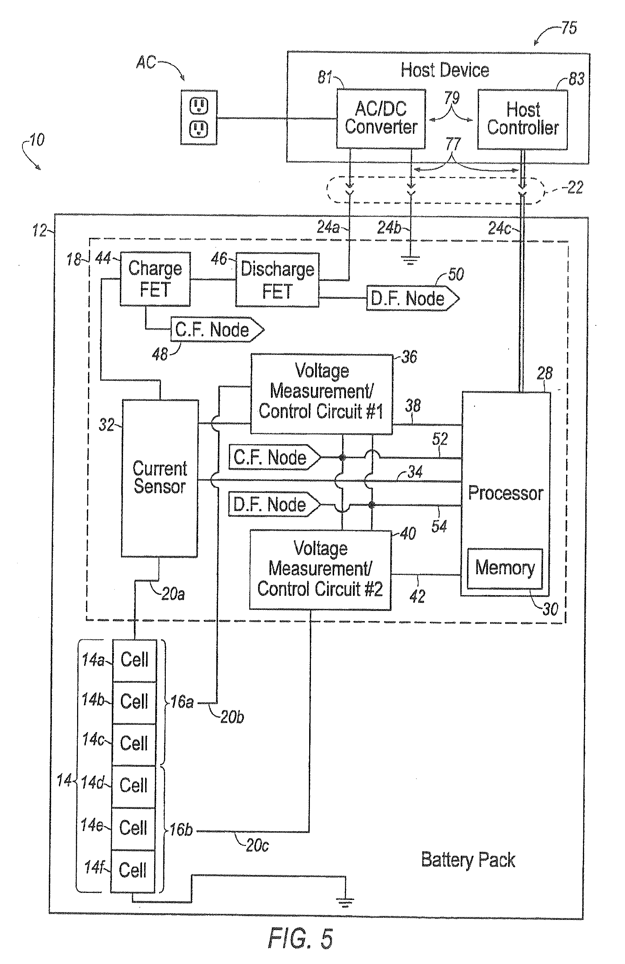

Referring to Figure 5, a schematic view of the rechargeable battery pack 10 is shown in accordance with an embodiment of the invention. In an embodiment, the recharging management circuitry 18 may include a processor 28. In an embodiment, the processor 28 may include memory, which is shown generally at 30. In an embodiment, the processor 28 may include logic for executing one or more of the algorithms S.100, S.200 described above.

In an embodiment, the recharging management circuitry 18 may include a current sensor 32. The current sensor 32 may be connected to the processor 28 by one or more nodes 34. In an embodiment, the current sensor 32 may be connected to each of the first and second banks of cells 16a, 16b by one or more nodes 20a.

In an embodiment, the recharging management circuitry 18 may include a first voltage detector/controller circuit 36. The first voltage detector/controller circuit 36 may be connected to the processor 28 by one or more nodes 38. In an embodiment, the first voltage detector/controller circuit 36 may be connected to the first bank of cells 16a by one or more nodes 20b. In an embodiment, the voltage detector/controller circuit 36 measures the voltage of one or more of the cells 14a-14c of the plurality of electrochemical cells 14 and communicates the voltage information from one or more of the cells 14a-14c to the processor 28.

In an embodiment, the recharging management circuitry 18 may include a second voltage detector/controller circuit 40. The second voltage detector/controller circuit 40 may be connected to the processor 28 by one or more nodes 42. In an embodiment, the second voltage detector/controller circuit 40 may be connected to the second bank of cells 16b by one or more nodes 20c. In an embodiment, the voltage detector/controller circuit 40 determines the voltage of one or more of the cells 14d-14f of the plurality of electrochemical cells 14 and communicates the voltage information from one or more of the cells 14d-14f to the processor 28.

In an embodiment, the recharging management circuitry 18 may include a charge field-effect transistor (FET) 44 and a discharge FET 46. In an embodiment, both the first voltage detector/controller 36 and the second voltage detector/controller 40 are connected to the charge FET 44 and discharge FET 46 by way of each FET's node 48 and 50 respectively. In an embodiment, each of the charge and discharge FETs 46, 50 may be connected to the processor 28 by one or more nodes 52, 54. Functionally, if an error/fault condition (e.g., an over-voltage, over-current, or the like) is detected, the first or second voltage detector/controllers 36, 40 or processor 28 will turn off both of the charge and discharge FETs 44, 46 in order to protect damage to the rechargeable battery pack 10. It will be appreciated that, in an embodiment, one or more of the processor 28 and first and second voltage detector/controllers 36, 40 may function by turning both of the charge and discharge FETs 44, 46 off; however, it will be appreciated that, in an embodiment, the processor 28 may function by turning both of the charge and discharge FETs 44, 46 on. In an embodiment, the first and second voltage detector/controllers 36, 40 can be implemented with discrete components or integrated circuits employing analog or digital techniques.

In an embodiment, one or more nodes 24a extend from the charge FET 44 to define a portion of the first end 26 of the interface 22. In an embodiment, one or more nodes 24b extend from the discharge FET 46 to define a portion of the first end 26 of the interface 22. In an embodiment, the one or more nodes 24a, 24b connect to an AC/DC converter 81 of the circuitry 79 of the host device 75. The AC/DC converter 81 connects to the main power system, AC.

In an embodiment, one or more nodes 24c extend from the processor 28 to define a portion of the first end 26 of the interface 22. In an embodiment, the one or more nodes 24c may include a serial communication bus that connects to a host controller 83 of the circuitry 79 of the host device 75.

In an embodiment, the processor 28 may include a TEXAS INSTRUMENTS® SBS compliant gas gauge IC (part no. BQ2084-DBT), which is adapted for use with the first and second voltage detector/controllers 36, 40. Functionally, the processor 28 monitors the capacity of the plurality of cells 14 and other parameters and communicates these properties to the host controller 83 over the serial communication bus 24c. The memory 30 of the processor 28 may be programmed with properties of the plurality of cells 14 such as, for example, its maximum voltage, maximum charging current, maximum capacity, and the like.

In an embodiment, the first and second voltage detector/controllers 36, 40 may include TEXAS INSTRUMENTS® protection analogue front end ICs (part no. BQ29312) that operate cooperatively with the charge and discharge FETs 44, 46 and current sensor 32. In an embodiment, the charge and discharge FETs 44, 46 may include transistor switches commercially available from International Rectifier Company (part no. IRF7328). In an embodiment, the current sensor 32 may include a sense resistor, coulomb counter or the like.

In an embodiment, when a charging cycle for recharging the rechargeable battery pack 10 is initiated, the processor 28 communicates the maximum charging capacity to the host controller 83. Before the rechargeable battery pack 10 is interfaced with the host device 75, the host controller 83 does not posses data regarding the characteristics of the rechargeable battery pack 10. For example, if the rechargeable battery pack includes a plurality of silver-zinc electrochemical cells 14 as described above, the processor 28 will communicate to the host device 75 status information and other battery specifications (collectively "meta data" such as maximum charging capacity, charge current, state of charge, and the like) with respect to the plurality of silver-zinc electrochemical cells 14. Accordingly, the host controller 83 may in turn communicate the meta data to a central processing unit (not shown) of the host device 75 for switching the recharging management circuitry 18 on/off and to determine if the rechargeable battery pack 10 is an approved model/type that may be interfaced with the host device 75. As described above, the processor 28 may be programmed with a default maximum capacity, which is used when no maximum capacity is provided by the host controller 83.

In an embodiment, the first and second voltage detector/controllers 36, 40 may be programmed with a maximum voltage for each cell 14a-14f of the plurality of cells 14. In an embodiment, un-regulated charge current flows from the main power system, AC, to the AC/DC converter 81, which provides DC current to the first and second voltage detector/controllers 36, 40. In an embodiment, the charge FETs 44, 46 are turned on (by way of nodes 48, 50) by the processor 28 when one or more of the plurality of electrochemical cells 14 are to be charged, and, in an embodiment, the processor 28 will turn off the charge FETs 44, 46 when a charge cycle is completed. In an embodiment, both of the processor 28 and voltage detector/controllers 36, 40 may turn off the charge and discharge FET 44, 46 at any time, such as, for example, when an error/fault condition occurs.

In an embodiment, as the cells 14a-14f are charging, the first and second voltage detector/controllers 36, 40 monitor the voltage in each cell 14a-14f of the plurality of cells 14 (i.e., in an embodiment, the voltage monitor comprises the first and second voltage detector/controllers 36, 40). In an embodiment, when one or more cells 14a-14f, but fewer than all of the cells 14a-14f, are charged to their maximum voltage threshold value, the processor 28, by way of voltage detector/controllers 36, 40, engages a bypass, which diverts current away from the one or more cells 14a-14f having a maximum voltage while the remaining one or more cells 14a-14f having a voltage less than the maximum voltage continue to charge. In an embodiment, when each of cells 14a-14f is charged to its maximum voltage, but holds less than the maximum capacity, the first and second voltage detector/controllers 36, 40 reduce the charge current to affect a drop in voltage, and continue to charge the plurality of cells 14.

In an embodiment, the current sensor 32 detects battery current, which information is read by the processor 28. In an embodiment, the battery current information is encoded in an electrical analog signal. In an embodiment, the battery current is read by to the processor 28, wherein the processor 28 integrates the current over time in order to determine total coulombs. Total coulombs can, in turn, be used to determine if/when the plurality of cells 14 are charged to their maximum capacity. Upon reaching the maximum capacity, the processor 28 engages the charge and discharge FETs 44, 46 to arrest the current flowing to the plurality of cells 14. In an embodiment, the current sensor 32 is a high accuracy, low ohmage resistor.

It will be appreciated that the recharging management circuitry 18 associated with the rechargeable battery pack 10 is useful for charging or recharging any suitable battery such as, for example, secondary batteries that have a communication bus. In an embodiment, the communication bus may be attached to the battery. In an embodiment, either the host controller 83 or the processor 28 may store in software and/or firmware information such as the maximum voltage and/or the maximum capacity of the battery. In an embodiment, the host controller 83 or the processor 28 may also be programmed with information including, for example, charge current values, one or more quantitative values for each incremental reduction in current that occurs in a charge cycle, and other information describing physical properties of the battery. In an embodiment, to initiate charging of the battery, recharging management circuitry 18 reads the information stored in either the host controller 83 or the processor 28 which includes at least the maximum voltage. In an embodiment, the recharging management circuitry 18 uses at least the maximum voltage in conjunction with any of the above-mentioned charge algorithms, and, using its voltage monitor, capacity monitor, and a voltage detector/controller, the recharging management circuitry 18 carries out battery charging or recharging in accordance with the charge algorithm (e.g., S.100 or S.200 in Figures 2 and 4). In such battery management systems, the voltage monitor and the capacity monitor communicate with the voltage detector/controller.

Although the recharging management circuitry 18 has been described to be associated with a rechargeable battery pack 10, it will be appreciated that the above disclosure illustrates an embodiment of an implementation of the rechargeable battery pack 10. In an alternative embodiment, the recharging management circuitry 18 may be associated with a stand-alone battery charger device, the host device 75, or the like.

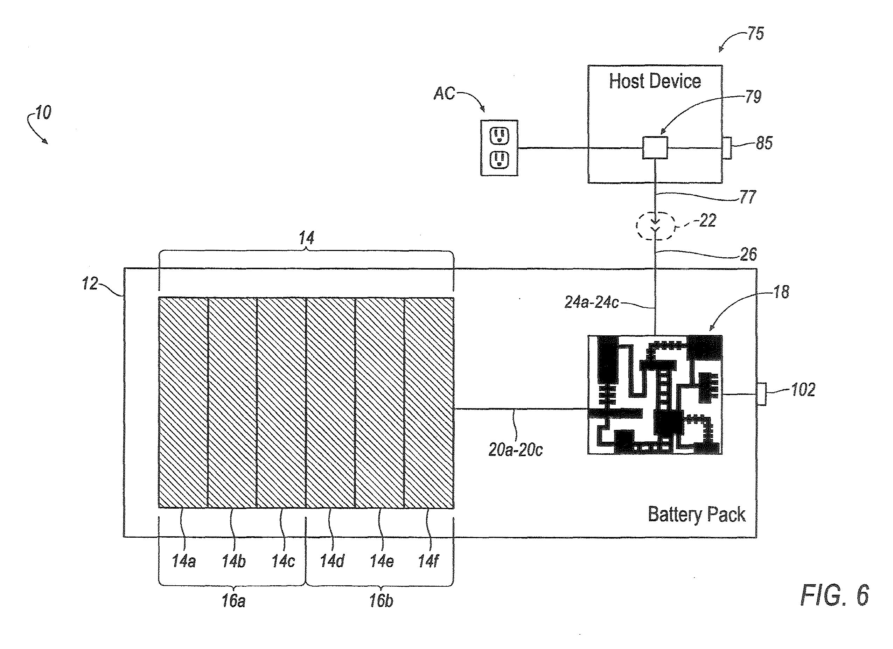

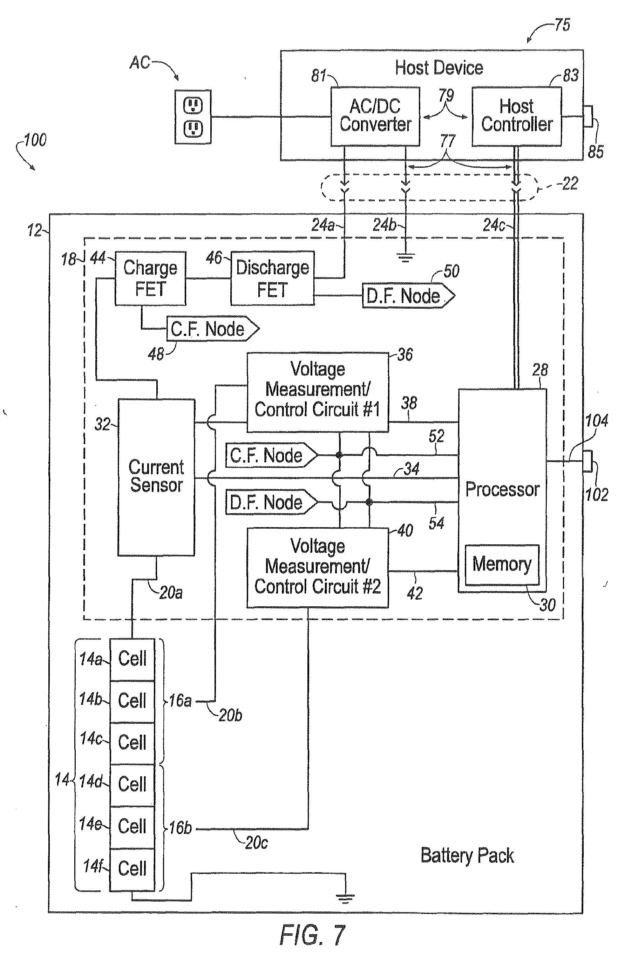

Referring to Figure 6, a rechargeable battery pack is shown at 100 in accordance with an embodiment of the invention. In an embodiment, the rechargeable battery pack 100 operates substantially similarly to the rechargeable battery pack 10 described above. However, the rechargeable battery pack 100 differs from the rechargeable battery pack 10 by including an input device, which is shown generally at 102. Referring to Figure 7, the input device 102 may be connected to the processor 28 by a node 104.

In an embodiment, the input device 102 may include a button, touchpad, mouse, lever, keyboard, joystick, trackball, or the like that permits a user to manipulate the algorithm S.100, S.200 of the recharging management circuitry 18. In an embodiment, the manipulation of the algorithm S.100, S.200 may include the adjusting of the maximum capacity setting.

In an embodiment, the maximum capacity of either the rechargeable battery device 10, 100 may be selected and set by the manufacturer according to industry standards. Accordingly, if a user wishes to extend the life of the rechargeable battery pack 100 by not charging the rechargeable battery pack 100 to the manufacturer's maximum capacity setting, the user may selectively reduce the maximum capacity setting by manipulating the algorithm S.100, S.200 with the input device 102.

In an alternative embodiment, it will be appreciated that manipulation of the algorithm S.100, S.200 is not limited to an input device 102 extending from the rechargeable battery pack 100; in an embodiment, an input device 85 may be provided with the host device 75. In an embodiment, the input device 85 of the host device 75 may be connected to the host controller 83. Alternatively, in an embodiment, the manipulation of the algorithm S.100, S.200 may be selected by software, firmware, or the like.

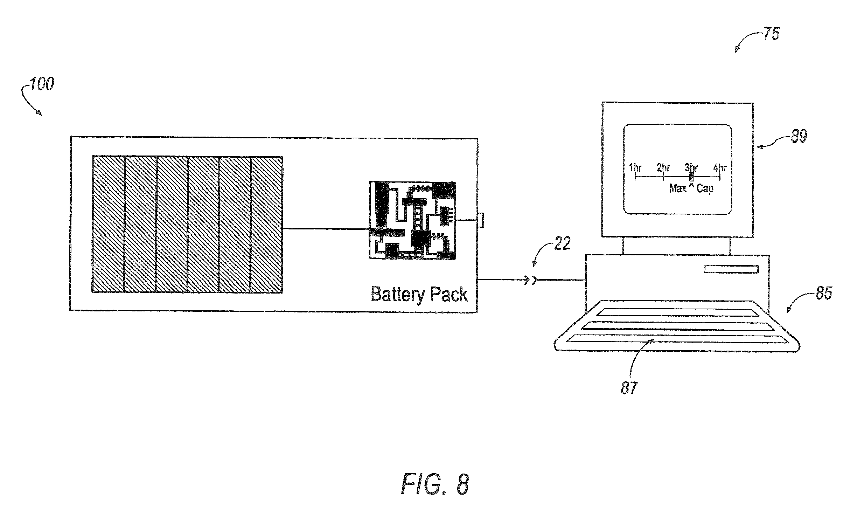

Referring to Figure 8, the host device 75 may include a desktop computer workstation. In an embodiment, the rechargeable battery pack 10, 100 may be connected to the desktop computer workstation 75 via an interface 22 described above. In an embodiment, the input device 85 of the desktop computer workstation 75 may include a keyboard 87 or the like. In an embodiment, the manipulation of the maximum capacity setting may be displayed on a monitor 89 of the desktop computer workstation 75.

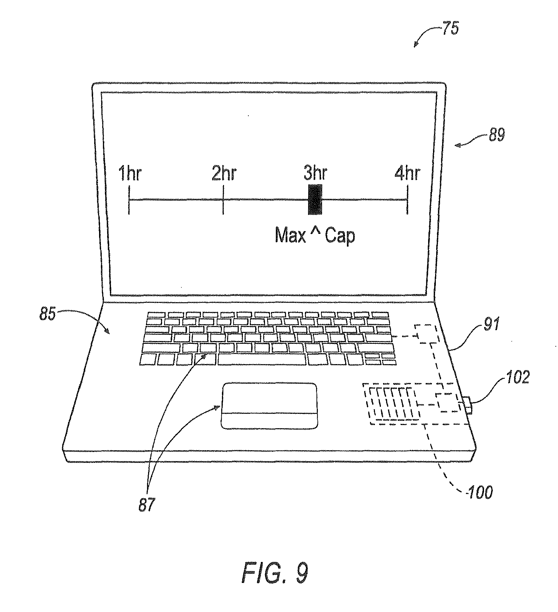

Referring to Figure 9, in an alternative embodiment, the host device 75 may include a laptop computer workstation. In an embodiment, the rechargeable battery pack 10, 100 may be disposed within a battery cavity of the laptop computer workstation 75. In an embodiment, the input device 102 may extend from the rechargeable battery pack 100, proximate a side 91 of the laptop computer workstation 75. As similarly described above, the input device 85 of the laptop computer workstation 75 may include an input device 85 comprising a keyboard, mouse touch pad 87 or the like. In an embodiment, the manipulation of the maximum capacity setting may be displayed on a monitor 89 of the laptop computer workstation 75.

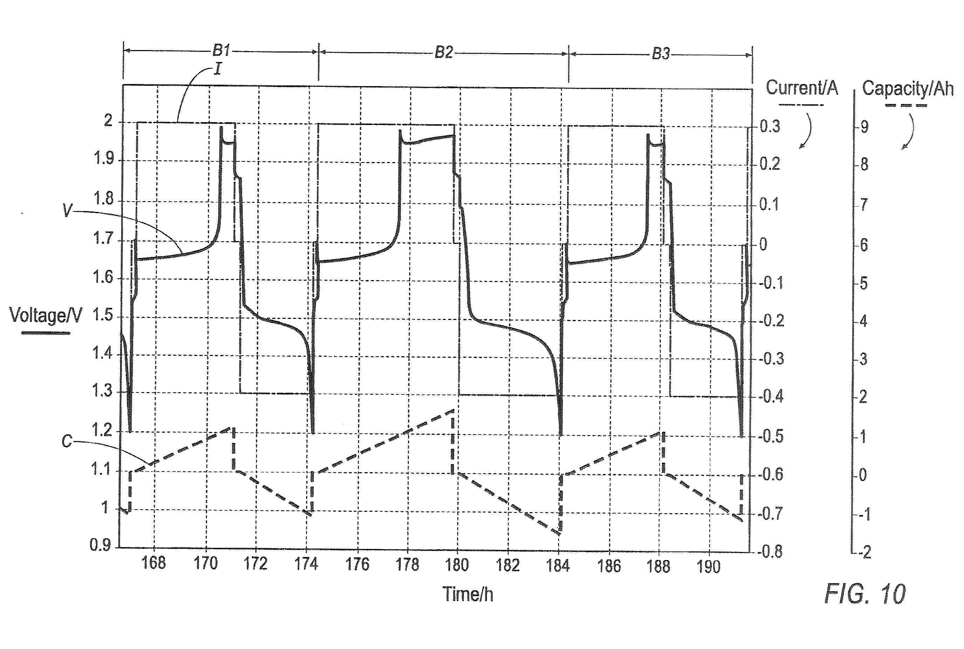

Referring to Figure 10, a graph depicting charging and discharging profiles of the rechargeable battery pack 100 is shown in accordance with an exemplary embodiment of the invention. In an embodiment, a current curve is shown generally a I, a voltage curve is shown generally at V, and a charge curve is shown generally at C. In an embodiment, the graph of Figure 10 illustrates three charge-discharge cycles at B1, B2 and B3 in accordance with an embodiment of the invention.

In an embodiment, according to the current curve, I, each charge-discharge cycle B1-B3 includes a sub-portion that is associated with a constant charging current of about 0.3A and a constant discharging current of about -0.4A. In an embodiment, when the constant current curve, I, is high (i.e., about 0.3A), the charge curve, C, is defined by a positive slope, and, when the constant current curve, I, is low (i.e. about -0.4A), the charge curve, C, is defined by a negative slope.

In an embodiment, the period of time that the current curve, I, is high may be controlled by a user through the use of input device 85, 102 described above. Accordingly, as seen in the first charge-discharge cycle, B1, the user may set the charging period with the input device 85, 102 for about three hours (i.e. hour 167 through hour 171); as such, when the host device 75 was activated for use by the user, the period of time that the rechargeable battery pack 100 was discharged was about three hours (i.e., hour 171 through hour 174).

Referring to the second charge-discharge cycle, B2, the user wished to achieve a greater period of use of the host device 75; as such, the user set the charging period for about six hours (i.e., hour 174 through hour 180). As a result of charging the rechargeable battery pack 100 for a longer period of time than that in the charge-discharge cycle, B1, the user was able to boost the capacity of the rechargeable battery pack 100 and thus increase the amount of power available to operate the host device 75. As illustrated, the net result for charging the rechargeable battery pack 100 approximately six hours resulted in approximately four hours (i.e., hour 180 through hour 184) of available power for the host device 75.

Although the above-described embodiments illustrate a desktop or laptop computer workstation as a host device 75, it will be appreciated that the host device 75 is not limited to a desktop or laptop computer workstation. In an embodiment, the host device 75 may include, for example, a portable music player, a portable video player, a cellular phone, digital camera, global positioning system device or any combination thereof.

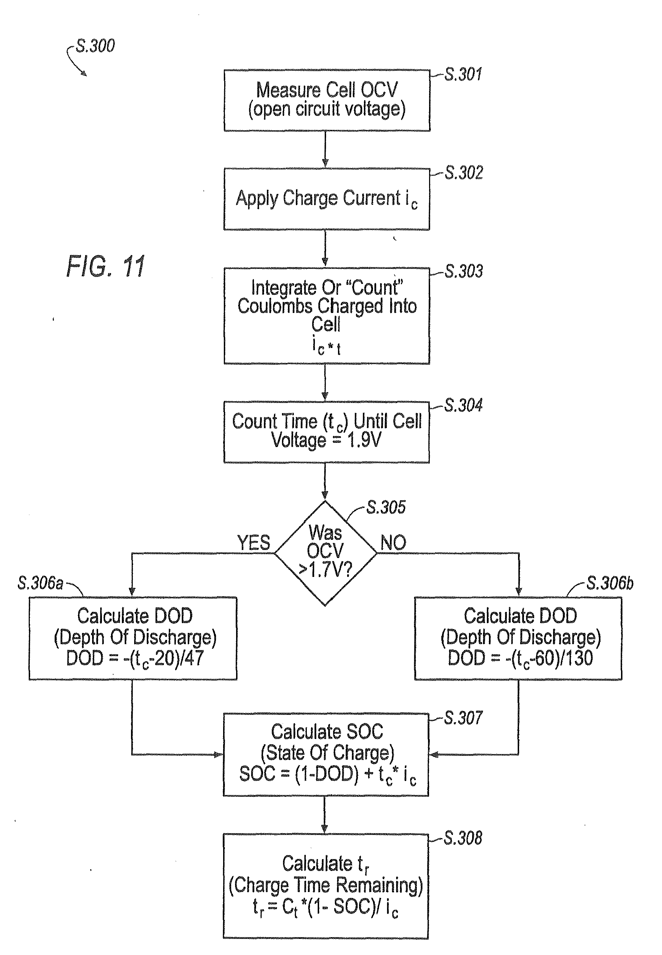

Referring now to Figures 11-20 a method for charging the rechargeable battery pack 10, 100 is described in accordance with an embodiment of the invention. The method generally prevents the over-charging of the rechargeable battery pack 100 in response to a desired target capacity ($C_t$) entered by the user by, for example, one or more of the input devices 85, 102. Accordingly, the method generally (a) determines an amount of charge that is present in the battery, (b) receives the desired target capacity ($C_t$) entered by the user, and (c) determines an amount of remaining charge time ($t_r$) needed to charge the rechargeable battery pack 100.

In an embodiment, an algorithm is shown generally at S.300 at Figure 11 in accordance with an embodiment of the invention. In an embodiment, the algorithm S.300 is concerned with charging the rechargeable battery pack 10, 100 by a) determining the present degree to which the battery is discharged (i.e. depth of discharge (DOD)) at steps S. 301-S.306, b) calculating the state of charge (SOC) at step S.307, and c) calculating the remaining charge time from the SOC by receiving a target capacity as a user-defined input that may be provided, for example, by an input device 85, 102 at step S.308.

At step S.301, an open circuit voltage (OCV) is measured at time 0.00 hours. Depending on the amount of remaining charge [i.e., the depth of discharge (DOD)], each cell in the rechargeable battery pack 100 may be nominally one of two possible voltages (e.g. 1.6V OCV or 1.86V OCV). It will be appreciated that because, in an embodiment, the rechargeable battery pack 10 may include a plurality of electrochemical cells 14 connected in series, a plurality of OCVs of 1.6V and 186V may be detected individually or additively in a corresponding fashion depending on how many cells 14a-14f of the plurality of electrochemical cells 14 are included in the design of the rechargeable battery pack 10.

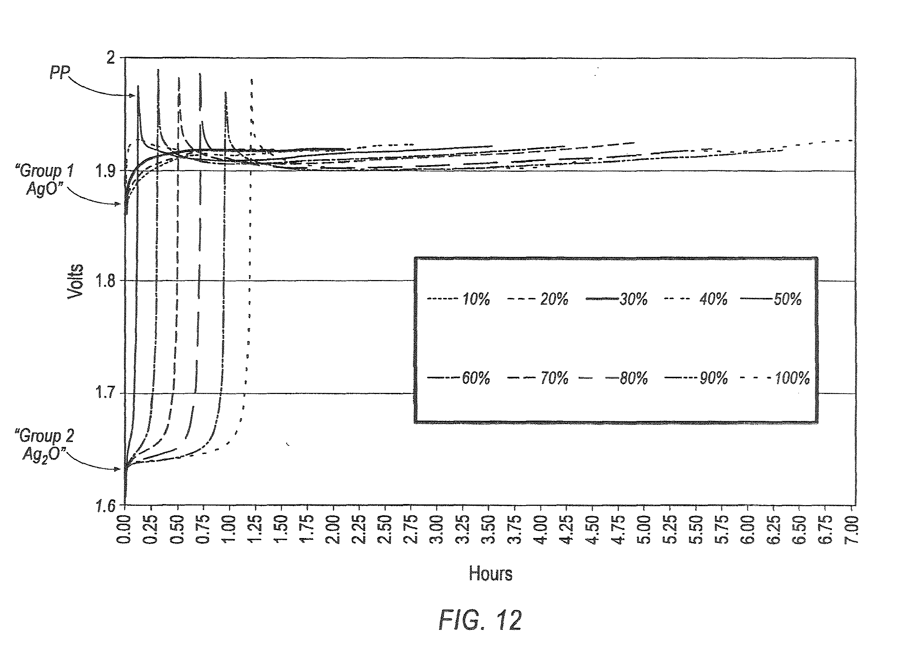

Referring to Figure 12, a relationship between the OCV and SOC is explained. In an embodiment, a plurality of SOC curves are shown in Figure 12 and are based upon the respective OCV present across a plurality of silver-zinc cells 14. It will be appreciated by those skilled in the art that the chemistry (i.e., silver-oxide state) of the plurality of silver-zinc cells 14 is dependent upon the SOC. For example, a plurality of silver-zinc cells 14 having a higher SOC charge level is said to be in a AgO silver-oxide state having an OCV of about 1.86V. Conversely, when a plurality of silver-zinc cells 14 having a lower SOC charge level is said to be in a $Ag_2O$ silver-oxide state having an OCV of about 1.6V (i.e., a deeper DOD results in a lower SOC since there is less charge left in the rechargeable battery pack 10). In an embodiment, a first group of curves having an OCV of about 1.86V is shown generally at "Group 1 - AgO." In an embodiment, a second group of curves having an OCV of about 1.6V is shown generally at "Group 2 - $Ag_2O$."

Once the OCV is determined, the algorithm S.300 is advanced to step S.302 where a charge current ($i_c$) is applied to the rechargeable battery pack 100. The current sensor 32 can be a passive current sensor or it can be an active device that measures current flow or coulomb count at step S.303.

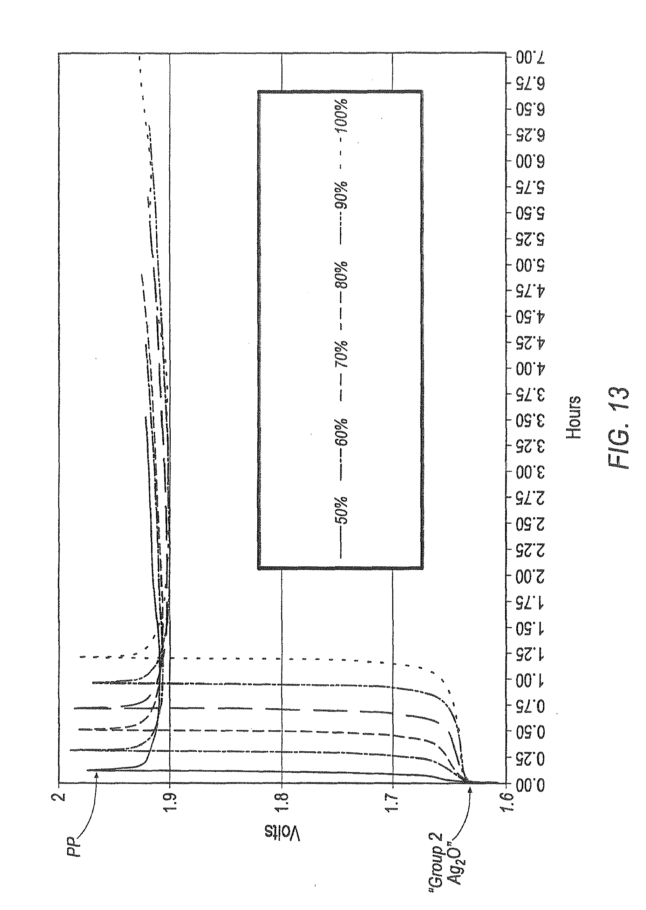

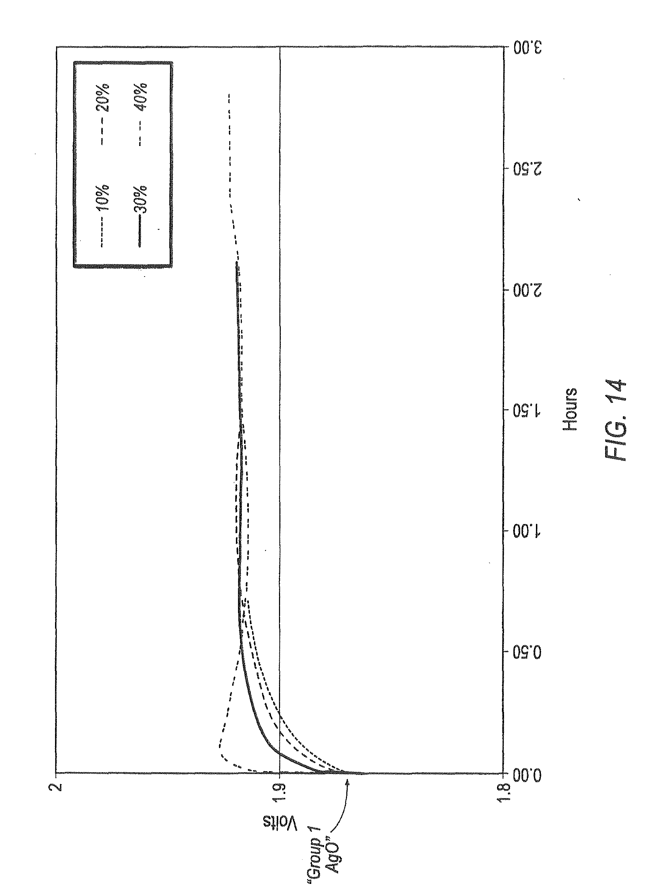

Upon applying the charge current ($i_c$) and monitoring the voltage at steps S.302-S.303, the processor 28 monitors the time ($t_c$) it takes to recharge the rechargeable battery pack 100 to a maximum voltage of approximately 1.9V per cell at step S.304. Referring to Figure 13, the "Group 2" curves each traverse the 1.9V OCV threshold at a different period in time depending on the DOD. Similarly, referring to Figure 14, the "Group 1" curves each traverse the 1.9V OCV threshold at a different period in time. Further, it will be appreciated that the "Group 1" curves do not include a polarization peak, PP, when compared to the characteristics of the "Group 2" curves.

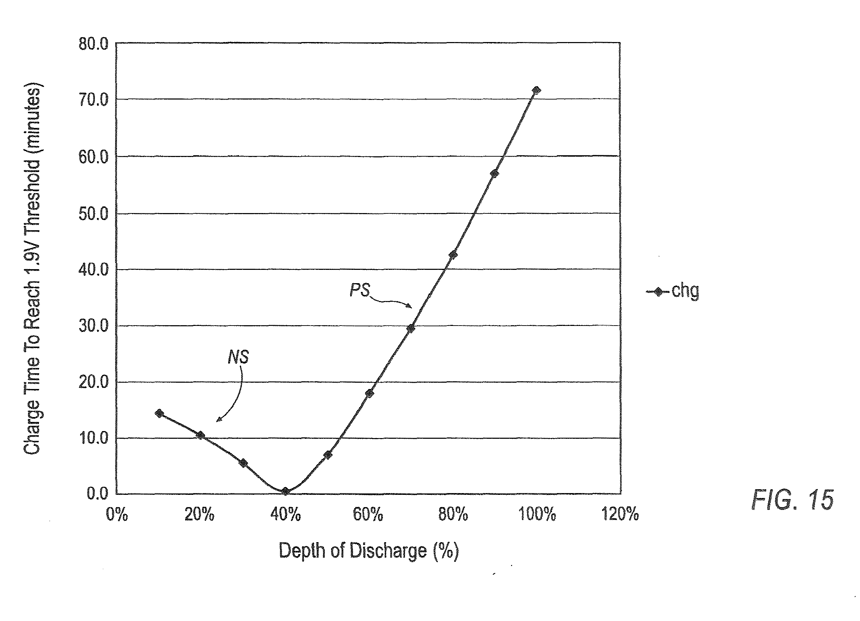

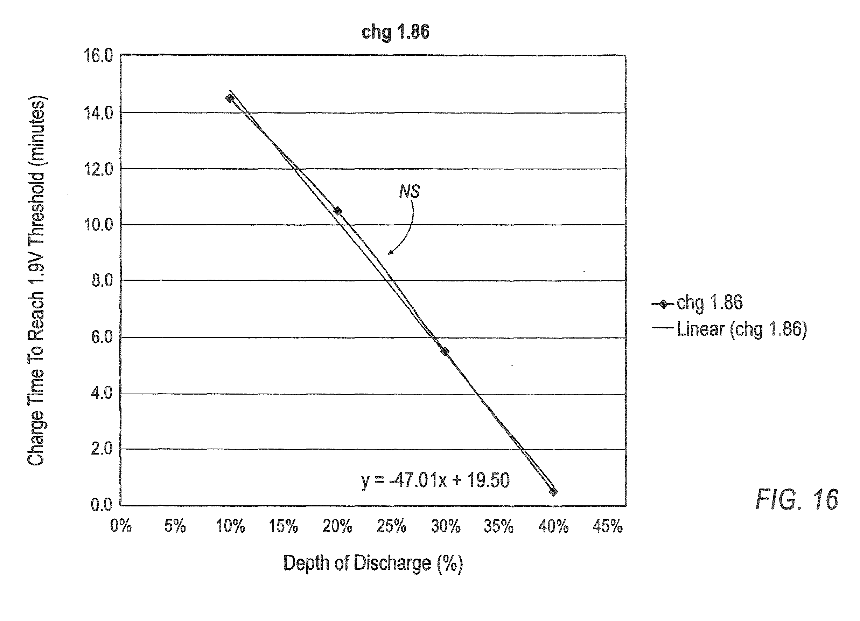

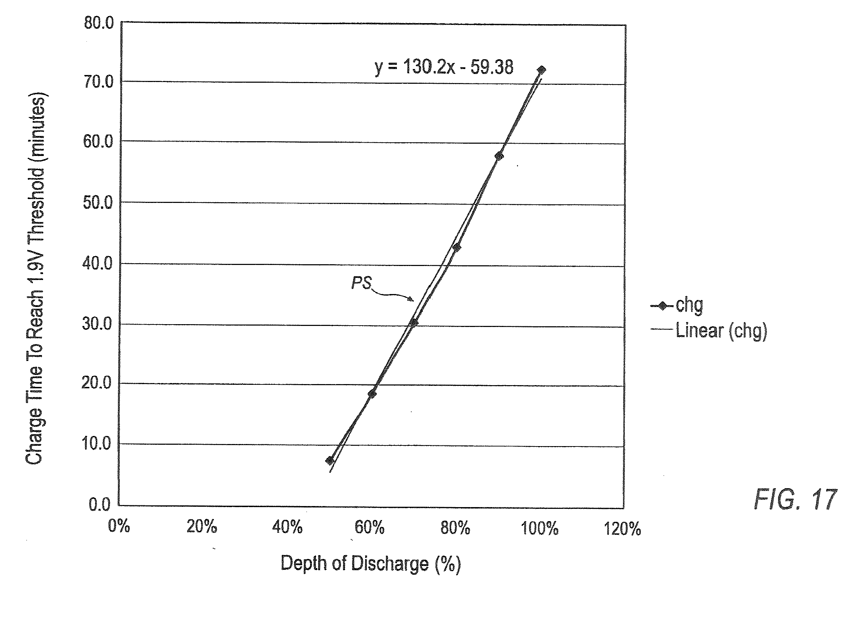

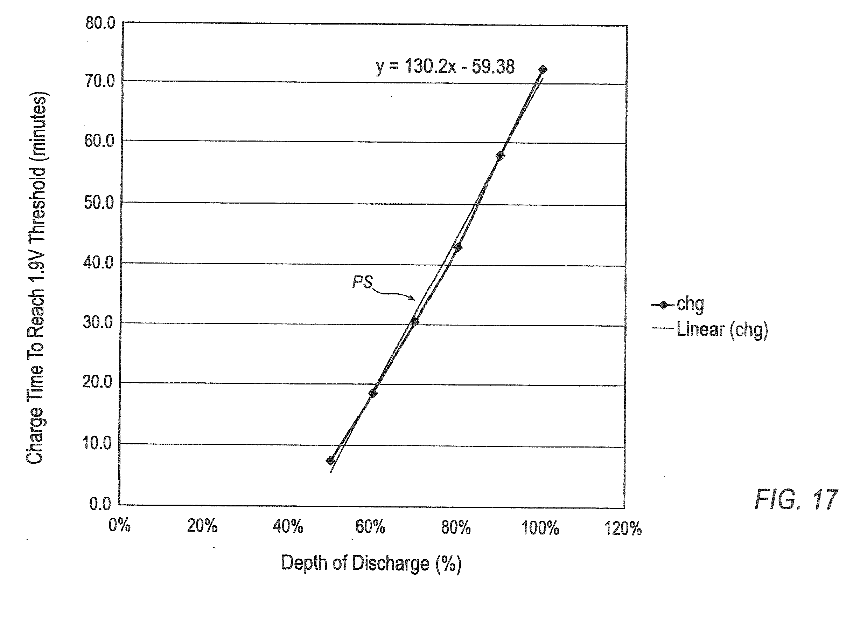

The amount of time needed for the rechargeable battery pack 100 to reach the 1.9V threshold may be determined according to two linear equations extrapolated from a "check mark" plot shown at Figure 15. In an embodiment, the "check mark" plot includes a negative slope portion, NS, and a positive slope portion, PS. In an embodiment, the negative slope portion, NS, is generally associated with the "Group 1" curves and the positive slope portion, PS, is generally associated with the "Group 2" curves. In an embodiment, as seen in Figure 16, the negative slope portion, NS, is generally defined by equation (1) shown below, and, in an embodiment, as seen in Figure 17, the positive slope portion, PS, is generally defined by equation (2) shown below.

$$y = -47.01x + 19.50 \qquad (1)$$

$$y = 130.2x - 59.38 \qquad (2)$$

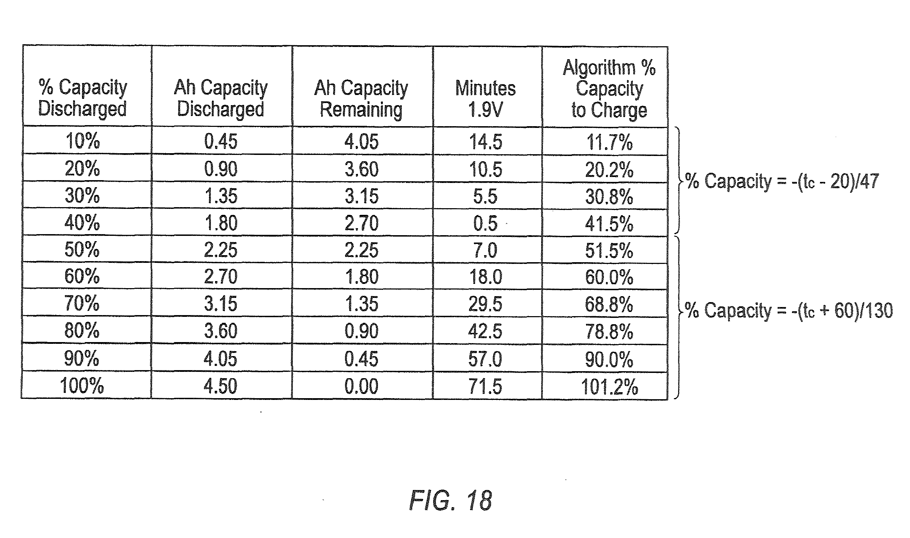

Referring to Figures 15 and 18, when the rechargeable battery pack 100 has been previously discharged approximately 10%, approximately 14.5 minutes is needed until the rechargeable battery pack 100 to reach the maximum charge of 1.9V. According to the "check mark" curve, the amount of time to reach the maximum charge of 1.9V is reduced to about 0.5 minutes when the rechargeable battery pack 100 was previously discharged to approximately 40%. The amount of time increases up to approximately 71.5 minutes when the rechargeable battery pack 100 was previously discharged to approximately 100%. Next, at step S.305, the procedure for calculating DOD is initiated by determining if the OCV determined from step S.301 was less than or greater than, for example, 1.7V. It will be appreciated that the value of 1.7V is selected for the purpose of analyzing a plurality of silver-zinc cells 14 and that the value may be different for a plurality of cells 14 having a chemistry other than silver-zinc. However, even though the starting voltages may be different for batteries of different chemistry, the methodology and systems disclosed herein are directly applicable to non-silver-zinc battery chemistries.

If, for example, the OCV was determined to be greater than 1.7V (i.e., approximately 1.86V), the algorithm S. 300 is advanced to step S.306a for calculating the DOD of a plurality of silver-zinc cells having an AgO silver-oxide state according to equation (3) shown below. Conversely, if, for example, the OCV was determined to be less than 1.7V (i.e., approximately 1.6V), the algorithm S.300 is advanced to step S.306b for calculating the DOD of a plurality of silver-zinc cells having $Ag_2O$ silver-oxide state according to equation (4) shown below.

$$DOD_{>1.7V} = -(t_c - 20) / 47 \quad (3)$$

$$DOD_{<1.7V} = -(t_c - 60) / 130 \qquad (4)$$

Upon calculating the DOD at either of steps S.306a, S.306b, the algorithm S.300 is advanced to step S.307 where the SOC is calculated. In am embodiment, the SOC is generally defined by equation (5) below including the applied charge current ($i_c$) from step S.302, the amount of time needed to reach the 1.9V threshold from step S.3.04, and the DOD calculated from step S.306a/S.306b.

$$SOC = (1 - DOD) + t_c * i_c \quad (5)$$

Once the SOC is calculated at step S.307, the algorithm S.300 is advanced to step S.308 where the remaining charge time ($t_r$) before reaching maximum capacity is calculated according to equation (6) below. In an embodiment, the remaining charge time ($t_r$) before reaching maximum capacity is determined according to the user-defined target capacity ($C_t$) that is entered by one or more of the input devices 85, 102, and, by utilizing the SOC calculated at step S. 307 along with the applied charge current ($i_c$) from step S.302.

$$t = C_t * [(1-SOC) / i_c] \qquad (6)$$

It will be appreciated that the algorithm S.300 prevents the rechargeable battery pack 100 from being overcharged by determined the remaining charge time ($t_r$) before reaching maximum capacity. By determining the remaining charge time ($t_r$) before reaching maximum capacity, the charge current ($i_c$) may be arrested and the life of the rechargeable battery pack 100 may be prolonged.

The embodiments disclosed herein have been discussed for the purpose of familiarizing the reader with novel aspects of the invention. Although preferred embodiments of the invention have been shown and described, many changes, modifications and substitutions may be made by one having ordinary skill in the art without necessarily departing from the spirit and scope of the invention as described in the following claims.

**Claims**

1. A zinc alkaline rechargeable battery pack, comprising:

 a plurality of electrochemical cells, wherein each cell comprises an alkaline electrolyte, an anode, and a cathode, wherein the anode comprises zinc, the cathode comprises silver, an oxide of silver, silver metal, or any combination thereof, and the alkaline electrolyte comprises an aqueous hydroxide of an alkali metal; and
 recharging management circuitry that is connected to the plurality of electrochemical cells, wherein the recharging management circuitry comprises
 a processor,
 a first voltage detector/controller connected to the processor,
 a second voltage detector/controller connected to the processor, and
 a current sensor connected to the processor, wherein the first voltage detector/controller, the second voltage detector/controller, and the current sensor are connected to the electrochemical cells.

2. The zinc alkaline rechargeable battery pack according to claim 1, wherein the plurality of electrochemical cells further comprises a first bank of cells that comprises three electrochemical cells, and a second bank of cells that comprises three electrochemical cells, wherein the current sensor is connected to both of the first bank of cells and the second bank of cells, the first voltage detector/controller is connected to the first bank of cells, and the second voltage detector/controller is connected to the second bank of cells.

3. The zinc alkaline rechargeable battery pack according to claim 1, wherein the recharging management circuitry further comprises
 a charge field effect transistor connected to the first voltage detector/controller and the processor, and
 a discharge field effect transistor connected to the second voltage detector/controller and the processor.

4. The zinc alkaline rechargeable battery pack according to claim 3, wherein the recharging management circuitry defines a first end of an interface comprising
 at least one first node extending from the charge field effect transistor,
 at least one second node extending from the discharge field effect transistor, and
 a serial communication bus extending from the processor.

5. The zinc alkaline rechargeable battery pack according to claim 4, wherein the first node and the second node define means for connecting the recharging management circuitry to an AC/DC converter of an external device that is coupled to a power source; and
 the serial communication bus defines means for connecting the recharging management circuitry to a host controller of the external device.

6. The zinc alkaline rechargeable battery pack according to claim 4, wherein the recharging management circuitry defines
 means for detecting a maximum voltage of at least one cell of the plurality of electrochemical cells,
 means for detecting a maximum charging capacity of the cell,
 means for reducing a constant current applied to the cell when the cell has been charged to about the maximum voltage, and
 means for arresting the constant current applied to the cell when the cell has been charged to about the maximum charging capacity.

7. The zinc alkaline rechargeable battery pack according to claim 6, wherein means for detecting the maximum voltage of at least one cell of the plurality of electrochemical cells comprises one or more of the first voltage detector/controller and the second voltage detector/controller, and means for detecting the maximum charging capacity of the cell comprises the current sensor.

8. The zinc alkaline rechargeable battery pack according to claim 4 further comprising

a casing, and

an input device extending from the casing, wherein the input device is connected to the processor, and a pre-set maximum charging voltage of at least one cell of the plurality of electrochemical cells and a pre-set maximum charging capacity of the cell is programmed into one or more of the processor and the serial communication bus.

9. The zinc alkaline rechargeable battery pack according to claim 8, wherein the input device is a binary controller, wherein the binary controller comprises a button, touchpad, mouse, lever, keyboard, joystick, or trackball.

10. The zinc alkaline rechargeable battery pack according to claim 8, wherein the input device defines

means for manipulating one or more of the pre-set maximum voltage of at least one cell of the plurality of electrochemical cells and the pre-set maximum charging capacity of the cell.

11. A system for charging a zinc alkaline rechargeable battery pack, comprising:

a host device comprising
an AC/DC converter and a host controller; and
a casing removably-coupled to the host device at an interface, wherein the casing comprises
a plurality of electrochemical cells, wherein each electrochemical cell comprises an alkaline electrolyte, an anode, and a cathode, wherein the anode comprises zinc, the cathode comprises silver, an oxide of silver, silver metal, or any combination thereof, and the alkaline electrolyte comprises an aqueous hydroxide of an alkali metal; and
recharging management circuitry associated with one of the host device or the casing, wherein the recharging management circuitry is connected to the plurality of electrochemical cells, and the recharging management circuitry comprises
a processor,
a first voltage detector/controller connected to the processor,
a second voltage detector/controller connected to the processor, and
a current sensor connected to the processor,
wherein the first voltage detector/controller, the second voltage detector/controller and current sensor are connected to the plurality of electrochemical cells.

12. The zinc alkaline rechargeable battery pack according to claim 11, wherein the plurality of electrochemical cells comprises

a first bank of electrochemical cells comprising three electrochemical cells, and

a second bank of electrochemical cells comprising three electrochemical cells, wherein the current sensor is connected to both of the first bank of cells and the second bank of cells, the first voltage detector/controller is connected to the first bank of cells, and the second voltage detector/controller is connected to the second bank of cells.

13. The zinc alkaline rechargeable battery pack according to claim 11, wherein the recharging management circuitry further comprises:

a charge field effect transistor connected to the first voltage detector/controller and the processor, and
a discharge field effect transistor connected to the second voltage detector/controller and the processor.

14. The zinc alkaline rechargeable battery pack according to claim 13, wherein the recharging management circuitry is disposed within the casing and defines a first end of an interface comprising
at least one first node extending from the charge field effect transistor,
at least one second node extending from the discharge field effect transistor, and
a serial communication bus extending from the processor.

15. The zinc alkaline rechargeable battery pack according to claim 14, wherein the first node and the second node define
means for connecting the recharging management circuitry to the AC/DC converter of the external device that is coupled to a power source, wherein the serial communication bus defines
means for connecting the recharging management circuitry to the host controller of the external device.

16. The zinc alkaline rechargeable battery pack according to claim 14, wherein the recharging management circuitry defines
means for detecting a maximum voltage of at least one cell of the plurality of electrochemical cells,

means for detecting a maximum charging capacity of the cell,
means for reducing a constant current applied to the cell when the cell has been charged to about the maximum voltage, and
means for arresting the constant current applied to the cell when the cell has been charged to about the maximum charging capacity.

17. The zinc alkaline rechargeable battery pack according to claim 16, wherein means for detecting the maximum voltage of the cell of the plurality of electrochemical cells comprises one or more of the first voltage detector/controller and the second voltage detector/controller, wherein means for detecting a maximum charging capacity of the cell comprises the current sensor.

18. The zinc alkaline rechargeable battery pack according to claim 14, further comprising
an input device extending from one or more of the host controller of the host device and the processor of the casing, wherein a pre-set maximum charging voltage of at least one cell of the plurality of electrochemical cells and a pre-set maximum charging capacity of the cell is programmed into one or more of the processor and the serial communication bus.

19. The zinc alkaline rechargeable battery pack according to claim 18, wherein the input device is a binary controller, wherein the binary controller includes a button, touchpad, mouse, lever, keyboard, joystick, or trackball.

20. The zinc alkaline rechargeable battery pack according to claim 18, wherein the input device defines
means for manipulating one or more of the pre-set maximum voltage of at least one cell of the plurality of electrochemical cells and the pre-set maximum charging capacity of the cell.

21. The zinc alkaline rechargeable battery pack according to claim 18, wherein the host device includes one or more of a desktop computer workstation, a laptop computer workstation, a portable music player, a portable video player, a cellular phone, digital camera, and a global positioning system device.

22. A method for charging a zinc alkaline rechargeable battery pack, comprising the steps of:

providing a plurality of electrochemical cells, wherein each cell comprises an alkaline electrolyte, an anode, and a cathode, wherein the anode comprises zinc, the cathode comprises silver, an oxide of silver, silver metal, or any combination thereof, and the alkaline electrolyte comprises an aqueous hydroxide of an alkali metal;
providing recharging management circuitry connected to the plurality of electrochemical cells, wherein the recharging management circuitry is provided for
detecting a voltage of at least one cell of the plurality of electrochemical cells,
detecting a charging capacity of the cell,
reducing a constant current applied to the cell when the cell has been charged to about a maximum voltage, and
arresting the constant current applied to the cell when the cell has been charged to about a maximum capacity.

23. The method according to claim 22, wherein, after the reducing a constant current step and prior to the arresting the constant current step, further comprises the steps of
determining if the detected voltage is equal to or greater than the maximum voltage, and, if the detected voltage is equal to or greater than the maximum voltage, further reducing the constant current applied to the at least one cell of the plurality of electrochemical cells;
further detecting the charging capacity of the cell to determine if the cell has been charged to about a maximum capacity; and
looping the determining step and the further detecting step until the charging capacity of the cell has been charged to about the maximum capacity, and, upon charging the cell to about the maximum capacity, advancing the method to the arresting step.

24. The method according to claim 22, further comprising the steps of
providing an interface for permitting the recharging management circuitry to be interfaced with a host device; and
defining the recharging management circuitry to include a first end of the interface, wherein the first end of the interface comprises
one or more nodes extending from the recharging management circuitry for interfacing the recharging management circuitry with an AC/DC converter of the host device, and
at least a serial communication bus extending from the recharging management circuitry for interfacing the recharging management circuitry with a host controller of the host device.

25. The method according to claim 22, further comprising the step of:

providing an input device connected to the recharging management circuitry for manipulating the maximum capacity of at least one cell of the plurality of electrochemical cells.

FIG. 1

S.100

| Detect A Maximum Voltage Of The Battery Pack | —S.101 |

| Charge The Battery Pack With A Constant Current | —S.102 |

| Monitor Charging Of The Battery Pack To Detect The Charging Capacity Of The Battery Pack And When The Battery Pack Is Charged To About Its Maximum Voltage | —S.103 |

| Reduce The Constant Current When The Voltage Of The Battery Pack Is Charged To About The Maximum Voltage | —S.104 |

| Apply The Presently Adjusted Constant Current To The Battery Pack | —S.105 |

Has The Battery Pack Been Charged To About The Maximum Capacity? —S.106    YES

NO

Has The Battery Pack Been Charged To A Voltage That Is About The Maximum Voltage? —S.107

NO

YES

| Further Reduce The Constant Current | —S.108 |

FIG. 2

| Arrest The Constant Current When The Battery Pack Is Charged To About The Maximum Charge Capacity | —S.109 |

FIG. 3

EP 2 264 824 A1

S.200

Detect A Maximum Voltage Of The Battery Pack — S.201

Charge The Battery Pack With A Constant Current — S.202

Monitor Charging Of The Battery Pack To Detect The Charging Capacity Of The Battery Pack And When The Battery Pack Is Charged To About Its Maximum Voltage — S.203

Reduce The Constant Current When The Voltage Of The Battery Pack Is Charged To About The Maximum Voltage — S.204

Apply The Presently Adjusted Constant Current To The Battery Pack — S.205

Has The Battery Pack Been Charged To About The Maximum Capacity? — S.206

YES

NO

Has The Battery Pack Been Charged To A Voltage That Is Greater Than Or Equal To The Maximum Voltage? — S.207

NO

YES

Further Reduce The Constant Current — S.208

Arrest The Constant Current When The Battery Pack Is Charged To About The Maximum Charge Capacity — S.209

FIG. 4

FIG. 5

FIG. 6

FIG. 7

FIG. 8

*FIG. 9*

FIG. 10

EP 2 264 824 A1

*S.300*

*FIG. 11*

Measure Cell OCV
(open circuit voltage) — *S.301*

↓

Apply Charge Current $i_c$ — *S.302*

↓

Integrate Or "Count"
Coulombs Charged Into
Cell
$i_c * t$ — *S.303*

↓

Count Time ($t_c$) Until Cell
Voltage = 1.9V — *S.304*

↓

Was
OCV
>1.7V? — *S.305*

YES ← → NO

*S.306a*
Calculate DOD
(Depth Of Discharge)
DOD = -($t_c$-20)/47

*S.306b*
Calculate DOD
(Depth Of Discharge)
DOD = -($t_c$-60)/130

Calculate SOC
(State Of Charge)
SOC = (1-DOD) + $t_c * i_c$ — *S.307*

↓

Calculate $t_r$
(Charge Time Remaining)
$t_r = C_t * (1 - SOC) / i_c$ — *S.308*

FIG. 12

FIG. 13

FIG. 14

FIG. 15

chg 1.86

Charge Time To Reach 1.9V Threshold (minutes)

Depth of Discharge (%)

NS

$y = -47.01x + 19.50$

◆ chg 1.86
— Linear (chg 1.86)

FIG. 16

EP 2 264 824 A1

FIG. 17

FIG. 17

EP 2 264 824 A1

| % Capacity Discharged | Ah Capacity Discharged | Ah Capacity Remaining | Minutes 1.9V | Algorithm % Capacity to Charge |
|---|---|---|---|---|
| 10% | 0.45 | 4.05 | 14.5 | 11.7% |
| 20% | 0.90 | 3.60 | 10.5 | 20.2% |
| 30% | 1.35 | 3.15 | 5.5 | 30.8% |
| 40% | 1.80 | 2.70 | 0.5 | 41.5% |
| 50% | 2.25 | 2.25 | 7.0 | 51.5% |
| 60% | 2.70 | 1.80 | 18.0 | 60.0% |
| 70% | 3.15 | 1.35 | 29.5 | 68.8% |
| 80% | 3.60 | 0.90 | 42.5 | 78.8% |
| 90% | 4.05 | 0.45 | 57.0 | 90.0% |
| 100% | 4.50 | 0.00 | 71.5 | 101.2% |

$\%\ Capacity = -(t_c - 20)/47$

$\%\ Capacity = -(t_c + 60)/130$

*FIG. 18*

EP 2 264 824 A1

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 99/17418 A (CHARTEC LAB AS [DK]; OESTERGAARD KIM [DK]; NIELSEN OTTO MARTINUS [DK];) 8 April 1999 (1999-04-08)<br>* page 21, lines 20-26 *<br>* page 22, line 8 - page 23, line 30 *<br>* page 26, line 7 - page 33, line 31 *<br>* page 35, line 16 - page 50, line 19 *<br>----- | 1-7,<br>11-17,<br>22-24<br>8-10,<br>18-21 | INV.<br>H01M10/46<br>H02J7/00 |
| X | US 6 522 102 B1 (CHEIKY MICHAEL [US] ET AL) 18 February 2003 (2003-02-18)<br>* abstract *<br>* column 1, line 60 - column 2, line 33 *<br>* column 6, lines 11-44 *<br>* column 7, line 44 - column 11, line 34 *<br>* column 14, line 17 - column 15, line 20 *<br>* figure 4 *<br>----- | 1,2,11,<br>12,22 | |
| X<br><br>Y | US 5 889 385 A (PODRAZHANSKY YURY M [US] ET AL) 30 March 1999 (1999-03-30)<br>* column 1, line 23 - column 4, line 56 *<br>* column 5, line 46 - column 15, line 45 *<br>* figure 1 *<br>----- | 1,11<br><br>8-10,<br>18-21 | TECHNICAL FIELDS SEARCHED (IPC)<br><br>H01M<br>H02J<br>G01R |
| X | US 2001/011883 A1 (SONOBE SATOSHI [JP]) 9 August 2001 (2001-08-09)<br>* figures 1,4,5 *<br>* paragraphs [0015] - [0017], [0035], [0036] *<br>* paragraphs [0021] - [0034] *<br>----- | 1-4,<br>11-14 | |
| X | US 6 037 750 A (VON NOVAK WILLIAM [US]) 14 March 2000 (2000-03-14)<br>* figures 1,2 *<br>* column 1, line 6 - column 9, line 28 *<br>----- | 1-3,<br>11-13 | |

The present search report has been drawn up for all claims

| Place of search | Date of completion of the search | Examiner |
|---|---|---|
| The Hague | 12 November 2010 | Panitz, J |

EPO FORM 1503 03.82 (P04C01)

## ANNEX TO THE EUROPEAN SEARCH REPORT
## ON EUROPEAN PATENT APPLICATION NO.

EP 10 17 6880

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2010

| Patent document cited in search report | | Publication date | Patent family member(s) | | Publication date |
|---|---|---|---|---|---|
| WO 9917418 | A | 08-04-1999 | AT | 270467 T | 15-07-2004 |
| | | | AU | 9338298 A | 23-04-1999 |
| | | | CN | 1302467 A | 04-07-2001 |
| | | | DE | 69824887 D1 | 05-08-2004 |
| | | | DE | 69824887 T2 | 07-07-2005 |
| | | | EP | 1040547 A1 | 04-10-2000 |
| | | | JP | 4088414 B2 | 21-05-2008 |
| | | | JP | 2003503992 T | 28-01-2003 |
| | | | US | 5994878 A | 30-11-1999 |
| US 6522102 | B1 | 18-02-2003 | AU | 2002360515 A1 | 30-06-2003 |
| | | | CN | 1539177 A | 20-10-2004 |
| | | | DE | 10297088 T5 | 29-07-2004 |
| | | | DK | 200400204 A | 11-02-2004 |
| | | | EP | 1466380 A1 | 13-10-2004 |
| | | | GB | 2391106 A | 28-01-2004 |
| | | | JP | 2005513980 T | 12-05-2005 |
| | | | WO | 03052859 A1 | 26-06-2003 |
| US 5889385 | A | 30-03-1999 | NONE | | |
| US 2001011883 | A1 | 09-08-2001 | JP | 3638109 B2 | 13-04-2005 |
| | | | JP | 2001217012 A | 10-08-2001 |
| | | | TW | 502483 B | 11-09-2002 |
| US 6037750 | A | 14-03-2000 | AU | 6049699 A | 03-04-2000 |
| | | | WO | 0016462 A1 | 23-03-2000 |

EPO FORM P0459

For more details about this annex : see Official Journal of the European Patent Office, No. 12/82

**EP 2 264 824 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 981259 P
- US 60981308 P